# FASCICULE DE BREVET EUROPEEN

(11) **EP 4 192 732 B1**
(45) Date de publication et mention de la délivrance du brevet: **23.07.2025**
(21) Numéro de dépôt: 21746627.5
(22) Date de dépôt: 28.07.2021
(51) Int. Cl.: B64D 13/06

(54) **TURBOCOMPRESSEUR MOTORISÉ D'UN SYSTÈME DE CONDITIONNEMENT D'AIR, À REFROIDISSEMENT OPTIMISÉ**
MOTORISIERTER TURBOVERDICHTER EINES KLIMATISIERUNGSSYSTEMS MIT OPTIMALER KÜHLUNG
MOTORIZED TURBOCOMPRESSOR OF AN ENVIRONMENTAL CONTROL SYSTEM WITH OPTIMUM COOLING

(30) Priorité: 04.08.2020 FR 2008266
(43) Date de publication de la demande: 14.06.2023
(73) Titulaire: Liebherr-Aerospace Toulouse SAS, 31200 Toulouse (FR)
(72) Inventeur: BARTHES, Guillaume, 31016 Toulouse Cedex 2 (FR); FOURAGNAN, James, 31016 Toulouse Cedex 2 (FR)
(74) Mandataire: Bringer IP
(86) Numéro de dépôt international: PCT/EP2021/071203
(87) Numéro de publication internationale: WO 2022/028992

(56) Documents cités:
- EP-A1- 3 385 170
- EP-A1- 3 401 223
- US-A- 4 419 926
- US-A- 5 701 755

## Description

### Domaine technique de l'invention

L'invention concerne un turbocompresseur motorisé, faisant partie d'un système de conditionnement d'air. En particulier, l'invention concerne un turbocompresseur motorisé à refroidissement optimisé, pouvant par exemple être utilisé dans un véhicule comprenant un système de conditionnement d'air, par exemple de type aéronautique, ferroviaire, ou maritime.

### Arrière-plan technologique

Les turbocompresseurs motorisés sont utilisés dans plusieurs contextes, notamment dans les véhicules, par exemple dans un système de conditionnement d'air.

Ces turbocompresseurs motorisés comprennent généralement un compresseur entraîné par le moteur et permettant la compression de l'air extérieur. Une problématique importante relevée dans ces turbocompresseurs est le refroidissement du moteur du turbocompresseur motorisé.

D'une part, dans un système de conditionnement d'air, la problématique principale est d'assurer ce refroidissement sans trop impacter les performances et les coûts du système de conditionnement d'air, notamment en limitant l'usage de prélèvement d'air froid extérieur et/ou en ne provoquant pas une demande supplémentaire d'air sous pression qui entraînerait une nécessité plus grande de réchauffage, ce qui est contre-productif.

Notamment, le refroidissement du moteur doit être suffisamment efficace pour permettre une densité de puissance moteur compatible en termes de masse et d'encombrement avec l'intégration dans un système embarqué, notamment un véhicule, par exemple un aéronef.

En outre, les niveaux de températures auxquelles sont soumis les composants du turbocompresseur motorisé et en particulier le moteur, doivent être maîtrisés afin de prévenir tout dysfonctionnement, et doivent être compatibles avec les niveaux de fiabilité exigés dans les systèmes embarqués, notamment les très hauts niveaux de fiabilité exigés dans une application aéronautique.

La consommation d'énergie générée par le refroidissement du moteur doit rester faible pour ne pas influencer négativement le rendement global du système dans lequel il est embarqué. Ces considérations de rendements énergétiques et d'efficacité permettent en particulier de maîtriser le rendement global du système de conditionnement d'air.

Enfin, le rendement doit aussi être étudié au niveau global, notamment en termes de masse et de complexité, qui doivent rester raisonnables sous peine de pénaliser la performance globale du véhicule.

Des solutions proposées dans l'art antérieur consistent à refroidir le moteur par échange thermique avec une boucle liquide utilisée comme puits de chaleur. En particulier, dans certains systèmes, en particulier dans le domaine automobile, une boucle liquide est déjà utilisée pour refroidir d'autres composants et est conduite vers le moteur pour son refroidissement. Toutefois, cette solution est complexe à mettre en œuvre en l'absence de boucle liquide préexistante, et ajoute de la complexité et une baisse des performances dans une boucle liquide existante du fait du composant supplémentaire à refroidir.

Une autre solution de refroidissement de moteur de compresseur consiste à ventiler avec de l'air prélevé à l'extérieur du véhicule.

Dans ce cas, le débit de ventilation est généralement nul lorsque le véhicule est arrêté (notamment au sol pour un aéronef). Des ventilateurs sont utilisés pour compenser cette absence de ventilation ce qui rajoute une complexité au système, et réduit les performances énergétiques. Plus généralement, le prélèvement d'air de ventilation induit des baisses de performances du véhicule.

Les inventeurs ont cherché à proposer un nouveau type de turbocompresseur motorisé d'un système de conditionnement d'air, permettant un bon refroidissement du moteur.

L'état de l'art est illustré par le document EP-A1-3 385 170.

### Objectifs de l'invention

L'invention vise à fournir un turbocompresseur motorisé d'un système de conditionnement d'air permettant de pallier au moins un des inconvénients des turbocompresseurs motorisés de l'art antérieur.

L'invention vise en particulier à fournir, dans au moins un mode de réalisation, un turbocompresseur motorisé de système de conditionnement d'air énergétiquement efficace.

L'invention vise en particulier à fournir, dans au moins un mode de réalisation, un turbocompresseur motorisé utilisable quel que soit l'état du véhicule et les conditions extérieures.

L'invention vise en particulier à fournir, dans au moins un mode de réalisation, un turbocompresseur motorisé peu encombrant et peu massif.

### Exposé de l'invention

Pour ce faire, l'invention concerne un turbocompresseur motorisé selon la revendication 1.

Un turbocompresseur motorisé selon l'invention permet donc de fournir un refroidissement du moteur efficace et économe en énergie, tirant pleinement partie de l'air sortant de la cabine. On entend par cabine la partie du véhicule accueillant les éléments transportés par le véhicule, en particulier les passagers du véhicule. On parle aussi d'habitacle.

Dans le cadre de son utilisation dans un système de conditionnement d'air, le compresseur du turbocompresseur motorisé a pour fonction principale de permettre à l'air provenant du conduit d'arrivée d'air d'atteindre ou d'approcher la pression requise dans la cabine.

Un dispositif du traitement d'air du système de conditionnement d'air peut être agencé entre le turbocompresseur motorisé et la cabine pour effectuer des traitements supplémentaires, en amont ou en aval de la cabine. En particulier, le dispositif de traitement d'air comprend tout élément complémentaire au turbocompresseur motorisé pour traiter l'air circulant dans le système de conditionnement d'air entre le compresseur et la turbine de récupération d'énergie du turbocompresseur motorisé, par exemple un ou plusieurs compresseurs supplémentaires pour atteindre des taux de compression plus élevé, un ou plusieurs échangeurs de chaleur, une boucle d'extraction d'eau permettant d'extraire l'eau, une ou plusieurs turbines de détente, etc.

L'air sortant de la cabine est dans un premier temps détendu dans une turbine de récupération d'énergie, jusqu'à une pression proche de la pression extérieure du véhicule, ce qui permet de récupérer de l'énergie (l'enthalpie de détente) pouvant être utilisé dans le système pour améliorer l'efficacité énergétique globale. En outre, la détente dans la turbine a comme effet de réduire la température de l'air cabine, et de condenser l'eau présente dans l'air cabine pour former des gouttelettes d'eau en suspension.

Ainsi, l'air détendu est particulièrement efficace pour servir de refroidissement du carter du moteur et du moteur. Par exemple, l'air détendu est injecté dans un circuit de refroidissement de la surface extérieure du carter. Cet air détendu, qui est plus froid que le moteur, va refroidir le carter du moteur et le moteur par conduction thermique, et l'eau en suspension dans l'air détendu va se vaporiser en présence de la chaleur dégagée par le moteur et le carter du moteur, en absorbant cette chaleur, de façon à améliorer le refroidissement du carter du moteur et le moteur.

L'utilisation de l'air détendu permet donc de refroidir plus efficacement que dans les dispositifs de l'art antérieur, ou bien de refroidir de la même façon avec un débit d'air plus faible ce qui améliore l'efficacité énergétique globale du turbocompresseur motorisé, du système de conditionnement d'air dans lequel il est intégré, et du véhicule dans lequel le système de conditionnement d'air est embarqué.

Si le système de conditionnement d'air comprend une boucle d'extraction d'eau, le canal de refroidissement peut comprendre un moyen d'injection de l'eau extraite par la boucle d'extraction d'eau, configuré pour réinjecter l'eau extraite dans le canal de refroidissement afin améliorer le refroidissement.

Le turbocompresseur motorisé ne dépend pas d'un système extérieur pour le refroidissement de son moteur de compresseur.

Avantageusement et selon l'invention, la turbine de récupération d'énergie est agencée sur l'arbre de transmission.

Selon cet aspect de l'invention, le compresseur, la turbine et le moteur sont reliés par l'arbre de transmission et forment ainsi le turbocompresseur motorisé d'un seul tenant. L'énergie récupérée par la turbine est ainsi utilisée pour réduire la consommation d'énergie du moteur nécessaire pour entraîner le compresseur, ce qui réduit la chaleur générée par le moteur.

Avantageusement et selon l'invention, le turbocompresseur motorisé comprend une bifurcation agencée entre la sortie de la turbine et le canal de refroidissement, la bifurcation comprenant une entrée configurée pour recevoir l'air détendu, et comprenant au moins deux sorties, une première sortie configurée pour conduire une partie du débit d'air détendu vers le canal de refroidissement, et une deuxième sortie configurée pour conduire une autre partie du débit d'air détendu vers une sortie d'échappement.

Selon cet aspect de l'invention, la bifurcation permet l'équilibrage de la pression en sortie de la turbine : si la totalité de l'air détendu est envoyé dans le canal de refroidissement pour refroidir le carter du moteur et le moteur, une perte de charge en résultant peut réduire les performances globales du système, notamment les performances de la turbine.

En permettant un équilibrage passif des débits entre le canal de refroidissement et la sortie au niveau de la bifurcation, la turbine fonctionne à son maximum de performance (le rapport entre la pression en entrée de la turbine et la sortie de la turbine est optimisé) car la perte de charge en aval de sa sortie est optimisée, et le refroidissement de l'air cabine est efficace, ce qui améliore le refroidissement du moteur et du carter du moteur.

Avantageusement et selon l'invention, la bifurcation est configurée pour qu'une majorité de l'eau en suspension dans l'air conditionné soit conduite vers le canal de refroidissement.

Selon cet aspect de l'invention, la bifurcation optimise la distribution en eau de l'air cabine envoyé vers le canal de refroidissement et l'air cabine directement évacué. La présence d'eau en suspension dans l'air cabine n'impacte pas les performances en perte de charge mais est avantageuse pour le refroidissement. Ainsi, la bifurcation est configurée pour que la majorité de l'eau soit transmise vers le canal de refroidissement. Cette configuration peut se faire de façon active (contrôlée) ou de préférence passive (sans intervention, ce qui limite notamment l'énergie consommée et la complexité du système). Par exemple, la bifurcation présente une forme géométrique dans laquelle la première sortie reliée au canal de refroidissement est sensiblement colinéaire à la direction du flux d'air conditionné pour que l'eau présente dans le flux soit conduite majoritairement dans cette sortie, la deuxième sortie étant orientée selon un angle différent de sorte à ce que l'eau se dirige de préférence vers la première sortie.

Avantageusement et selon l'invention, le carter du moteur comprend des ailettes de refroidissement.

Selon cet aspect de l'invention, les ailettes permettent de maximiser le refroidissement du moteur et du carter. Les ailettes sont fabriquées dans un matériau conducteur de chaleur pour maximiser les échanges thermiques.

Selon d'autres variantes de l'invention, tout autre dispositif améliorant l'échange thermique peut être ajouté au carter du moteur.

L'invention concerne également un procédé d'alimentation d'une cabine d'un véhicule, caractérisé en ce qu'il comprend les étapes suivantes :
- comprimer, via un compresseur entraîné par un moteur, un air provenant d'un conduit d'arrivée d'air et conduire cet air sous pression, à une pression correspondant à la pression nécessaire à l'alimentation de la cabine, vers une entrée de la cabine,
- détendre, via une turbine de récupération d'énergie, un air cabine provenant d'une sortie de la cabine,
- conduire au moins une partie de l'air détendu par la turbine, vers un carter du moteur du compresseur de sorte à refroidir ledit carter de moteur et ledit moteur.

Avantageusement, le procédé d'alimentation selon l'invention est mis en œuvre par un turbocompresseur motorisé selon l'invention.

Avantageusement, le turbocompresseur motorisé selon l'invention met en œuvre le procédé d'alimentation selon l'invention.

L'invention concerne également un système de conditionnement d'air, configuré pour alimenter en air conditionné une cabine d'un véhicule, caractérisé en ce qu'il comprend un turbocompresseur motorisé selon l'invention configuré pour alimenter ladite cabine du véhicule en air sous pression.

Avantageusement et selon l'invention, le système de conditionnement d'air comprend un dispositif de traitement d'air, configuré pour recevoir l'air sous-pression en aval de l'entrée de la cabine et/ou pour recevoir l'air cabine en aval de la turbine de récupération d'énergie, et comprenant des équipements destinés à traiter l'air sous-pression avant l'entrée de la cabine et/ou à traiter l'air provenant de la sortie de la cabine.

Avantageusement et selon l'invention, le dispositif de traitement d'air comprend un ou plusieurs équipements parmi la liste suivante :
- un ou plusieurs compresseurs supplémentaires,
- un ou plusieurs échangeurs de chaleur,
- une boucle d'extraction d'eau permettant d'extraire l'eau,
- une ou plusieurs turbines de détente.

Le dispositif de traitement d'air regroupe ainsi l'ensemble des équipements nécessaires au système de conditionnement d'air en complément du turbocompresseur motorisé pour d'obtenir de l'air conditionné à fournir à la cabine et/ou traiter l'air en sortie de cabine.

L'invention concerne également un véhicule comprenant un système de conditionnement d'air et une cabine, caractérisé en ce qu'il comprend un turbocompresseur motorisé selon l'invention configuré pour alimenter la cabine en air sous pression.

Le véhicule est par exemple un véhicule automobile, aéronautique, maritime ou ferroviaire.

L'invention concerne également un turbocompresseur motorisé, un procédé d'alimentation, un système de conditionnement d'air et un véhicule, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :

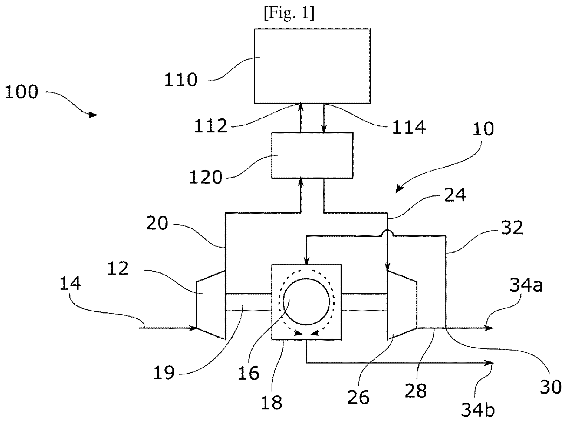

[Fig. 1] est une vue schématique d'un turbocompresseur motorisé d'un système de conditionnement d'air selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

La figure 1 illustre schématiquement un turbocompresseur motorisé 10 faisant partie d'un système 100 de conditionnement d'air, agencé en particulier pour comprimer l'air en entrée du système de conditionnement d'air jusqu'à la pression nécessaire à l'alimentation d'une cabine du véhicule, et détendre l'air sortant de la en cabine pour récupérer son énergie sous forme d'enthalpie et améliorer l'efficacité énergétique du système.

Le système de conditionnement d'air est configuré pour fournir de l'air conditionné, par exemple à un véhicule dans lequel il est embarqué, en particulier dans la cabine ou l'habitacle de ce véhicule (cabine d'un aéronef ou d'un bateau, voiture ou wagon d'un véhicule ferroviaire, habitacle d'un véhicule automobile, etc.). Pour généraliser, le terme « cabine » est utilisé dans la suite de la description pour nommer la cabine ou l'habitacle d'un véhicule, selon le type de véhicule dans lequel l'invention est mise en œuvre.

La cabine 110 comprend une entrée 112 de cabine et une sortie 114 de cabine de laquelle sort un air ayant traversé la cabine, dit air 24 cabine.

La cabine 110 est alimentée en air sous pression en particulier par un compresseur 12 alimenté en air par un conduit 14 d'arrivée d'air. L'air provenant du conduit 14 d'arrivée d'air est par exemple de l'air extérieur, ou de l'air provenant d'un autre système embarqué dans le véhicule qui embarque le système de conditionnement d'air. Par exemple, dans un aéronef, l'air peut être prélevé d'un moteur propulsif.

Le compresseur 12 est entraîné en rotation par un moteur 16 entouré par un carter 18. Le moteur entraîne en rotation un arbre 19 de transmission auquel est relié le compresseur 12.

Le système de conditionnement d'air comprend généralement des équipements supplémentaires de traitement de l'air, réunis ici dans un dispositif 120 de traitement d'air. Ainsi, le dispositif 120 de traitement d'air désigne l'ensemble des autres équipements constitutifs du système de conditionnement d'air en sus du turbocompresseur motorisé 10, par exemple un ou plusieurs compresseurs, une ou plusieurs turbines, un ou plusieurs échangeurs de chaleur, une boucle d'extraction d'eau, etc.

L'air sous pression, éventuellement traitée par le dispositif 120 de traitement d'air entre par l'entrée 112 de la cabine et traverse ensuite la cabine 110.

L'air 24 cabine est éventuellement traité à sa sortie par le dispositif de traitement d'air. L'air 24 cabine est ensuite détendu par une turbine 26 de récupération d'énergie du turbocompresseur motorisé 10. La turbine 26 de récupération d'énergie permet de récupérer de l'énergie provenant de l'air 24 cabine, en détendant et refroidissant cet air 24 cabine. Dans ce mode de réalisation, la turbine 26 de récupération d'énergie est reliée à l'arbre 19 de transmission afin de réduire la consommation d'énergie du moteur 16 pour entraîner le compresseur 12. La turbine 26, le moteur 16 et le compresseur 12 forment ensemble le turbocompresseur 10 motorisé.

Dans l'art antérieur, l'air sortant de la turbine de récupération d'énergie est envoyée vers l'extérieur après récupération de l'énergie.

Dans le turbocompresseur motorisé de l'invention, l'air sortant de la turbine, dit air détendu, est aussi utilisé comme source de refroidissement.

En particulier, comme représenté dans ce mode de réalisation, l'air 28 détendu sort de la turbine 26 est atteint une bifurcation 30. Cette bifurcation comprend une entrée reliée à la sortie de la turbine 26 et permet de conduire une partie de l'air 28 détendu vers une première sortie vers un canal 32 de refroidissement, et l'autre partie de l'air 28 détendu soit vers une première sortie 34a d'échappement vers l'atmosphère ou vers un système ou zone du véhicule dont la pression est proche de la pression atmosphérique.

La partie de l'air 28 détendu circulant dans le canal 32 de refroidissement est conduite jusqu'au carter 18 du moteur afin de refroidir le carter 18 du moteur et le moteur 16. Pour faciliter le refroidissement, le carter 18 du moteur peut comprendre des ailettes (non représentées) ou tout autre dispositif améliorant l'échange thermique. Les éventuelles gouttelettes d'eau en suspension dans l'air 28 détendu conduit jusqu'au carter 18 du moteur améliorent le refroidissement par vaporisation de ces gouttelettes sous l'effet de la chaleur générée par le moteur 16 pour entraîner le compresseur 12. Pour maximiser le refroidissement, il est possible d'injecter de l'eau extraite par une boucle d'extraction d'eau du dispositif de traitement d'eau. Après refroidissement du moteur 16 et du carter 18 du moteur, l'air peut être évacuée par une deuxième sortie 34b d'échappement séparée, ou bien être redirigé vers la première sortie 34a d'échappement.

La bifurcation 30 permet un contrôle passif de la perte de charge au niveau du canal 32 de refroidissement et du carter 18 du moteur : la pression au niveau des de la première sortie 34a d'échappement ou de la deuxième sortie 34b d'échappement est la pression ambiante et la pression au niveau de la bifurcation 30 est la même pour la partie de l'air 28 détendu circulant dans la branche du canal 32 de refroidissement et la partie de l'air 28 détendu circulant dans la branche conduisant à la première sortie 34a d'échappement du véhicule, ce qui permet d'équilibrer les débits entre les deux branches.

Le système de conditionnement d'air intégrant le turbocompresseur motorisé peut être intégré dans un véhicule automobile, ferroviaire, maritime ou aéronautique.

## Revendications

1. Turbocompresseur motorisé d'un système de conditionnement d'air pour l'alimentation en air conditionné d'une cabine d'un véhicule, le turbocompresseur motorisé comprenant :
- un conduit (14) d'arrivée d'air, configuré pour un prélèvement d'air ambiant à pression ambiante,
- un compresseur (12) relié au conduit (14) d'arrivée d'air et configuré pour être relié à une entrée (112) de la cabine (110), configuré pour recevoir de l'air provenant du conduit (14) d'arrivée d'air, pour comprimer l'air provenant du conduit (14) d'arrivée d'air et pour fournir de l'air sous pression à une pression correspondant à la pression nécessaire à l'alimentation de la cabine (110),
- un moteur (16) relié au compresseur (12) par un arbre (19) de transmission, configuré pour entraîner le compresseur (12) et entouré par un carter (18),
- une turbine (26) de récupération d'énergie configurée pour être reliée à une sortie (114) de la cabine (110), et configurée pour détendre l'air cabine (24) provenant de la sortie (114) de la cabine (110) pour fournir un air (28) détendu via une sortie de la turbine (26),
**caractérisé en ce qu'**il comprend un canal (32) de refroidissement reliant la sortie de la turbine (26) et le carter (18) du moteur, ledit canal (32) de refroidissement étant configuré pour recevoir au moins une partie de l'air (28) détendu, de sorte à refroidir le carter (18) du moteur et le moteur (16).

2. Turbocompresseur motorisé selon la revendication 1, **caractérisé en ce que** la turbine (26) de récupération d'énergie est agencée sur l'arbre (19) de transmission.

3. Turbocompresseur motorisé selon l'une des revendications 1 ou 2, **caractérisé en ce qu'**il comprend une bifurcation (30) agencée entre la sortie de la turbine (26) et le canal (32) de refroidissement, la bifurcation comprenant une entrée configurée pour recevoir l'air (28) détendu, et comprenant au moins deux sorties, une première sortie configurée pour conduire une partie du débit d'air détendu vers le canal (32) de refroidissement, et une deuxième sortie configurée pour conduire une autre partie du débit d'air détendu vers une sortie (34a) d'échappement.

4. Turbocompresseur motorisé selon la revendication 3, **caractérisé en ce que** la bifurcation (30) est configurée pour qu'une majorité de l'eau de l'air (28) détendu soit conduite vers le canal (32) de refroidissement.

5. Turbocompresseur motorisé selon l'une des revendications 1 à 4, **caractérisé en ce que** le carter (18) du moteur comprend des ailettes de refroidissement.

6. Procédé d'alimentation en air sous pression d'une cabine d'un véhicule, **caractérisé en ce qu'**il comprend les étapes suivantes :
- comprimer, via un compresseur (12) entraîné par un moteur (16), un air provenant d'un conduit (14) d'arrivée d'air et conduire cet air (20) sous pression, à une pression correspondant à la pression nécessaire à l'alimentation de la cabine, vers une entrée (112) de la cabine (110),
- détendre, via une turbine (26) de récupération d'énergie, un air (24) cabine provenant d'une sortie (114) de la cabine,
- conduire au moins une partie de l'air détendu par la turbine vers un carter (18) du moteur du compresseur (12) de sorte à refroidir ledit carter (18) de moteur et ledit moteur (16).

7. Système de conditionnement d'air, configuré pour alimenter en air conditionné une cabine d'un véhicule, **caractérisé en ce qu'**il comprend un turbocompresseur (10) motorisé selon l'une des revendications 1 à 5 configuré pour alimenter ladite cabine du véhicule en air sous pression.

8. Système de conditionnement d'air selon la revendication 7, **caractérisé en ce qu'**il comprend un dispositif (120) de traitement d'air, configuré pour recevoir l'air sous-pression en aval de l'entrée de la cabine et/ou pour recevoir l'air cabine en aval de la turbine de récupération d'énergie, et comprenant des équipements destinés à traiter l'air sous-pression avant l'entrée de la cabine et/ou à traiter l'air provenant de la sortie de la cabine.

9. Système de conditionnement d'air selon la revendication 8, **caractérisé en ce que** le dispositif de traitement d'air comprend un ou plusieurs équipements parmi la liste suivante :
- un ou plusieurs compresseurs supplémentaires,
- un ou plusieurs échangeurs de chaleur,
- une boucle d'extraction d'eau permettant d'extraire l'eau,
- une ou plusieurs turbines de détente.

10. Véhicule comprenant un système de conditionnement d'air et une cabine, **caractérisé en ce qu'**il comprend un turbocompresseur (10) motorisé selon l'une des revendications 1 à 5 configuré pour alimenter la cabine en air sous pression.

## Patentansprüche

1. Angetriebener Turbokompressor einer Klimaanlage zur Versorgung einer Fahrzeugkabine mit klimatisierter Luft, der Turbokompressor umfasst:
- einen Lufteinlasskanal (14), der ausgestaltet ist, Umgebungsluft bei Umgebungsdruck zu sammeln,
- einen Kompressor (12), der mit dem Lufteinlasskanal (14) verbunden ist, der so ausgestaltet ist, dass er mit einem Einlass (112) der Kabine (110) verbunden werden kann, und so ausgestaltet ist, von dem Lufteinlasskanal (14) stammende Luft zu empfangen, die von dem Lufteinlasskanal (14) stammende Luft zu komprimieren und Druckluft mit einem Druck zu liefern, der dem zur Versorgung der Kabine (110) erforderlichen Druck entspricht,
- einen Motor (16), der mit dem Kompressor (12) durch eine Übertragungswelle (19) verbunden ist, und der ausgestaltet ist, den Kompressor (12) anzutreiben und der von einem Gehäuse (18) umgeben ist,
- eine Energierückgewinnungsturbine (26), die so ausgestaltet ist, dass sie mit einem Auslass (114) der Kabine (110) verbunden werden kann und so ausgestaltet ist, die aus dem Auslass (114) der Kabine (110) stammende Kabinenluft (24) zu expandieren, um über einen Auslass der Turbine (26) expandierte Luft (28) zu liefern,
**dadurch gekennzeichnet, dass** dieser einen Kühlkanal (32) umfasst, der den Auslass der Turbine (26) und das Gehäuse (18) des Motors verbindet, worin der Kühlkanal (32) ausgestaltet ist, zumindest einen Teil der expandierten Luft (28) aufzunehmen, um das Motorgehäuse (18) und den Motor (16) zu kühlen.

2. Angetriebener Turbokompressor nach Anspruch 1, **dadurch gekennzeichnet, dass** die Energierückgewinnungsturbine (26) auf der Übertragungswelle (19) angeordnet ist.

3. Angetriebener Turbokompressor nach einem der Ansprüche 1 oder 2, **dadurch gekennzeichnet, dass** dieser eine Verzweigung (30) umfasst, die zwischen dem Auslass der Turbine (26) und dem Kühlkanal (32) angeordnet ist, worin die Verzweigung einen Einlass umfasst, der ausgestaltet ist, die expandierte Luft (28) aufzunehmen, und mindestens zwei Auslässe umfasst, von denen ein erster Auslass ausgestaltet ist, einen Teil des Stroms der expandierten Luft zum Kühlkanal (32) zu leiten, und ein zweiter Auslass ausgestaltet ist, einen anderen Teil des Stroms der expandierten Luft zu einem Abgasauslass (34a) zu leiten.

4. Angetriebener Turbokompressor nach Anspruch 3, **dadurch gekennzeichnet, dass** die Verzweigung (30) so ausgestaltet ist, dass ein Großteil des Wassers in der expandierten Luft (28) zum Kühlkanal (32) geleitet wird.

5. Angetriebener Turbokompressor nach einem der Ansprüche 1 bis 4, **dadurch gekennzeichnet, dass** das Gehäuse (18) des Motors Kühlrippen aufweist.

6. Verfahren zur Versorgung einer Fahrzeugkabine mit Druckluft, **dadurch gekennzeichnet, dass** es die Schritte umfasst:
- Komprimieren von Luft, die aus einem Lufteinlasskanal (14) stammt, mittels eines von einem Motor (16) angetriebenen Kompressors (12) und Leiten dieser Druckluft (20) mit einem Druck, der dem für die Versorgung der Kabine erforderlichen Druck entspricht, zu einem Einlass (112) der Kabine (110),
- Expandieren von Kabinenluft (24), die von einem Auslass (114) der Kabine stammt, mit einer Energierückgewinnungsturbine (26),
- Leiten zumindest eines Teils der von der Turbine expandierten Luft zu einem Gehäuse (18) des Motors des Kompressors (12), um das Motorgehäuse (18) und den Motor (16) zu kühlen.

7. Klimaanlage, welche ausgestaltet ist, einer Fahrzeugkabine klimatisierte Luft zuzuführen, **dadurch gekennzeichnet, dass** diese einen angetriebenen Turbokompressor (10) nach einem der Ansprüche 1 bis 5 umfasst, der ausgestaltet ist, die Fahrzeugkabine mit Druckluft zu versorgen.

8. Klimaanlage nach Anspruch 7, **dadurch gekennzeichnet, dass** diese eine Luftbehandlungseinrichtung (120) umfasst, die ausgestaltet ist, die Druckluft stromabwärts des Kabineneinlasses zu empfangen und/oder die Kabinenluft stromabwärts der Energierückgewinnungsturbine zu empfangen, und die Einrichtungen umfasst, die dazu bestimmt sind, die Druckluft vor dem Kabineneinlass zu behandeln und/oder die vom Kabinenauslass kommende Luft zu behandeln.

9. Klimaanlage nach Anspruch 8, **dadurch gekennzeichnet, dass** die Luftbehandlungseinrichtung eine oder mehrere Einrichtungen aus der Liste umfasst:
- einen oder mehrere Zusatzkompressoren,
- einen oder mehrere Wärmetauscher,
- einen Wasserentnahmekreislauf zur Entnahme von Wasser,
- eine oder mehrere Expansionsturbinen.

10. Fahrzeug mit einer Klimaanlage und einer Kabine, **dadurch gekennzeichnet, dass** dieses einen angetriebenen Turbokompressor (10) nach einem der Ansprüche 1 bis 5 umfasst, der ausgestaltet ist, die Kabine mit Druckluft zu versorgen.

## Claims

1. A driven turbocompressor of an air conditioning system for supplying conditioned air to a cabin of a vehicle, the driven turbocompressor comprising:
- an air intake duct (14) configured to collect ambient air at ambient pressure,
- a compressor (12) connected to the air intake duct (14) and configured to be connected to an inlet (112) of the cabin (110), configured to receive air originating from the air intake duct (14), to compress the air originating from the air intake duct (14) and to supply pressurized air at a pressure corresponding to the pressure needed to supply the cabin (110),
- a motor (16) connected to the compressor (12) by a transmission shaft (19), configured to drive the compressor (12) and surrounded by a casing (18),
- an energy recovery turbine (26) configured to be connected to an outlet (114) of the cabin (110), and configured to expand the cabin air (24) originating from the outlet (114) of the cabin (110) to supply expanded air (28) via an outlet of the turbine (26),
**characterized in that** it comprises a cooling duct (32) connecting the outlet of the turbine (26) and the casing (18) of the motor, said cooling duct (32) being configured to receive at least some of the expanded air (28), so as to cool the motor casing (18) and the motor (16).

2. The driven turbocompressor according to claim 1, **characterized in that** the energy recovery turbine (26) is arranged on the transmission shaft (19).

3. The driven turbocompressor according to one of claims 1 or 2, **characterized in that** it comprises a bifurcation (30) arranged between the outlet of the turbine (26) and the cooling duct (32), the bifurcation comprising an inlet configured to receive the expanded air (28), and comprising at least two outlets, a first outlet configured to direct some of the flow of expanded air to the cooling duct (32), and a second outlet configured to direct another portion of the flow of expanded air to an exhaust outlet (34a).

4. The driven turbocompressor according to claim 3, **characterized in that** the bifurcation (30) is configured so that a majority of the water in the expanded air (28) is directed to the cooling duct (32).

5. The driven turbocompressor according to one of claims 1 to 4, **characterized in that** the casing (18) of the motor comprises cooling fins.

6. A method for supplying pressurized air to a cabin of a vehicle, **characterized in that** it comprises the following steps:
- compressing, via a compressor (12) driven by a motor (16), air originating from an air intake duct (14), and directing that pressurized air (20), at a pressure corresponding to the pressure needed to supply the cabin, to an inlet (112) of the cabin (110),
- expanding, via an energy recovery turbine (26), cabin air (24) originating from an outlet (114) of the cabin,
- directing at least some of the air expanded by the turbine to a casing (18) of the compressor (12) motor so as to cool said motor casing (18) and said motor (16).

7. An air conditioning system, configured to supply conditioned air to a cabin of a vehicle, **characterized in that** it comprises a driven turbocompressor (10) according to one of claims 1 to 5 configured to supply said cabin of the vehicle with pressurized air.

8. The air conditioning system according to claim 7, **characterized in that** it comprises an air treatment device (120), configured to receive the pressurized air downstream of the inlet of the cabin and/or to receive the cabin air downstream of the energy recovery turbine, and comprising equipments intended to treat the pressurized air before the inlet of the cabin and/or to treat the air coming from the outlet of the cabin.

9. The air conditioning system according to claim 8, **characterized in that** the air treatment device comprises one or more equipments from the following list:
- one or more additional compressors,
- one or more heat exchangers,
- a water extraction loop for extracting water,
- one or more expansion turbines.

10. A vehicle comprising an air conditioning system and a cabin, **characterized in that** it comprises a driven turbocompressor (10) according to one of claims 1 to 5 configured to supply the cabin with pressurized air.
